Europäisches Patentamt

European Patent Office

Office européen des brevets

(11) Publication number: **0 337 639**
**A1**

(12) **EUROPEAN PATENT APPLICATION**

(21) Application number: **89303308.4**

(51) Int. Cl.⁴: **C22C 38/18**

(22) Date of filing: **04.04.89**

(30) Priority: **05.04.88 JP 86169/88**

(43) Date of publication of application:
**18.10.89 Bulletin 89/42**

(84) Designated Contracting States:
**DE FR GB IT SE**

(71) Applicant: **KOYO SEIKO CO., LTD.**
**2, Unagidani Nishin-cho Minami-ku**
**Osaka-shi Osaka-fu(JP)**

Applicant: **NIPPON KOSHUHA STEEL CO., LTD.**
**7-2, Otemachi 1-chome Chiyoda-ku**
**Tokyo(JP)**

(72) Inventor: **Hyodo, Yoshiaki c/o Koyo Seiko Co.,**
**Ltd.**
**2, Unagidani Nishin-cho Minami-ku**
**Osaka-shi Osaka-fu(JP)**
Inventor: **Miyakawa, Toshihiro Nippon**
**Koshuha Steel Co., Ltd.**
**7-2, Otemachi 1-chome Chiyoda-ku**
**Tokyo(JP)**

(74) Representative: **Ellis, Edward Lovell et al**
**MEWBURN ELLIS & CO. 2/3 Cursitor Street**
**London EC4A 1BQ(GB)**

(54) **A high carbon chromium bearing steel.**

(57) A high carbon chromium bearing steel in which a carbon content is from 1.1% to 1.5% by weight, a silicon content is 1.0% by weight, a chromium content is 0.7% to 1.3% by weight, and a manganese content is 0.2% to 1.0% by weight, with remaining constituents including inavoidable impurities and iron, whereby this bearing steel offers excellent rolling fatigue life.

EP 0 337 639 A1

# A high carbon chromium bearing steel

The present invention relates to a high carbon chromium bearing steel which is used as a material used for rolling and sliding members such as rolling bearings and sprags for one-way clutches.

In recent years, the design of lighter, thinner, shorter, and more compact devices and the use of ultimate design practices have resulted in extremely severe operating conditions for rolling bearings while a longer bearing service life has been required.

Conventionally, materials used for such rolling bearings are high carbon chromium bearing steels specified in the Japan Industrial Standards (JIS), and of these various steels, SUJ2 is most common. This SUJ2 steel is characterized by 1.0% by weight of carbon and 1.5% by weight of chromium; the structure of this steel is martensitized in the quench and temper heat process, and SUJ2 is generally used with an approximately 10% residual austenite and approximately 7% non-solute carbide content.

However, when the operating conditions become extreme and a high stress is applied to a raceway surface of a bearing manufactured from the aforementioned conventional SUJ2, plastic deformation occurs centering on the point of maximum shear stress below the surface, rolling fatigue is thus accelerated, and when lubrication is insufficient or when a large slide occurs even with sufficient lubrication, a large tangential force acts on the raceway surface, the aforementioned maximum shear stress point approaches the surface and the maximum value of the shear stress increases, and as with when the aforementioned high contact stress is applied, plastic deformation occurs and fatigue is accelerated. Moreover, if hard contaminants are present in the lubricant, these contaminants are pressed on the contact surface during use, plastic deformation of the raceway surface occurs and indentations are made, these indentations become stree-concentrated points from which raceway surface flaking begins, and this thus results in a shortened service life. Specifically, when the operating conditions become extreme, and particularly when high loads are working, or when a relatively high sliding friction arises due to insufficient lubrication conditions, and moreover when indentations occur due to contaminants in the lubricant, sufficient service life cannot be expected with the conventional SUJ2 steel. Stated another way, the conventional SUJ2 steel is not sufficiently able to satisfy the extreme operating conditions which have become common necessary in recent years.

Therefore, it is an object of the present invention to provide a high carbon chromium bearing steel having greater hardness and temper softening resistance than SUJ2, which inhibits plastic deformation which is a cause of shortened rolling bearing life, and therefore which is able to increase the rolling fatigue life of the bearing.

In order to achieve the above objective, a high carbon chromium bearing steel according to the present invention has a carbon content of 1.1% to 1.5% by weight, a silicon content of 1.0% to 2.0% by weight, a chromium content of 0.7% to 1.3% by weight, a manganese content of 0.2% to 1.0% by weight, with remaining constituents including unavoidable impurities and iron, and which thereby offers an outstanding rolling fatigue life.

In a high carbon chromium bearing steel according to the present invention, the carbon content is limited to 1.1% to 1.5% by weight (hereafter simply percent (%)) for the following reasons. The minimum carbon content limit is 1.1% because by making the minimum content limit higher than the carbon content of SUJ2 (0.95% to 1.1% C), the carbide content in the matrix is increased, resulting in higher hardness than SUJ2; the maximum carbon content is 1.5% because if the carbon content is greater than 1.5%, spheroidizing of the aforementioned carbides becomes difficult.

The reasons for limiting the silicon content to 1.0% to 2.0% are discussed below. Silicon is a matrix strengthening element, and is known to increase temper softening resistance. Thus, the addition of silicon has the effect of increasing deformation resistance under high loads. and therefore has the effect of increasing bearing life. However, these effects are not achieved if the silicon content is less than 1.0%, and, in addition, cold processability deteriorates if the silicon content is greater than 2.0%. Therefore, the maximum silicon content is defined to be 2.0%, and the minimum to be 1.0%.

The reasons for limiting the chromium content to 0.7% to 1.3% are discussed below. Chromium is a carbide-forming element and is also a hardenability improving element. If the chromium content is less than 0.7%, control of heat processing conditions becomes difficult due to reduced hardenability and a reduced residual carbide content. Thus, the minimum chromium content is 0.7%. On the other hand, if the chromium content is equivalent to that of conventional steel (1.3% to 1.6% in SUJ2), carbide growth is facilitated and large carbides are formed because of the high carbon content, and service life is therefore reduced. Thus, the upper limit to the chromium content is 1.3%.

The reasons for limiting the manganese content to 0.2% to 1.0% are discussed below. The lower limit

2

is 0.2% in order to achieve hardenability and a residual austenite content comparable to the common SUJ2 steel, and the upper limit is 1.0% because if more manganese is added the residual austenite content rises.

As will be understood from the above description about the reasons for specifying the content ranges, according to the present invention, high hardness, specifically greater than HRc 64 as compared with HRc 62 of SUJ2, can be achieved, the matrix can be strengthened, and the service life can be increased to approximately ten times that of conventional materials. Furthermore, the high carbon chromium bearing steel according to the present invention when used in a rolling bearing or similar application inhibits plastic deformation at and near the point of maximum shear stress even under high contact stress and large tangential forces on the raceway surface due to a slide acting thereon. The bearing steel of the present invention can therefore suppress the development of rolling fatigue on the inside, and minimize the size of indentations formed on the surface by possible impressed contaminants; therefore, high stress concentration does not occur, and flaking of the raceway surface is inhibited. Specifically, even under extreme conditions, plastic deformation can be inhibited, and rolling fatigue life can therefore be increased.

Furthermore, a slightly higher non-solute carbide content than that of SUJ2 can be achieved, and wear resistance can therefore be improved. This fact is particularly beneficial when sliding acts on the raceway surface.

The present invention will become more fully understood from the detailed description given hereinbelow and the accompanying drawings which are given by way of illustration only, and thus are not limitative of the present invention, and wherein:

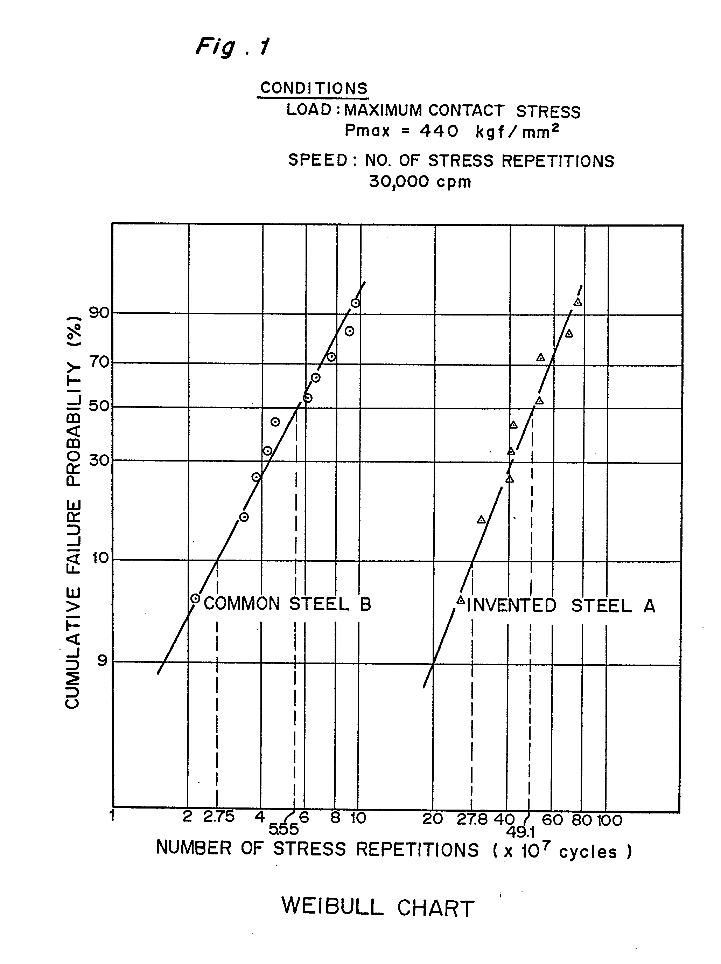

Fig. 1 is a graph plotted on a Weibull chart of the rolling fatigue test results of a preferred embodiment according to the present invention and a conventional steel (SUJ2) as a comparison control.

In Table 1, reference letter A refers to a preferred embodiment of a high carbon chromium bearing steel according to the present invention, and reference letter B refers to SUJ2, which has been used as a comparison control for the preferred embodiment A.

Table 1

| | Steel | C | Si | Mn | P | S | Cr | Hardness (HRc) | Note |
|---|---|---|---|---|---|---|---|---|---|
| A | Invented steel | 1.31 | 1.35 | 0.31 | 0.009 | 0.005 | 0.96 | >64 | - |
| B | Control steel | 1.00 | 0.30 | 0.32 | 0.009 | 0.005 | 1.47 | 62 | SUJ2 |

The invented steel A is a high carbon chromium bearing steel comprised of 1.31% carbon, 1.35% silicon, 0.96% chromium, 0.31% manganese, and 0.009% sulfur and 0.005% phosphorus being unavoidable impurities, respectively, with the rest of the composition being iron. The manganese content and the sulfur and phosphorus content, unavoidable impurities, are equivalent to those of the control steel SUJ2.

The hardness of the steel A is greater than 64, significantly greater than the 62 of B (SUJ2). This is due to the higher carbide content in the matrix resulting from a carbon content of 1.31% as compared with the 1.00% of the control B. However, the chromium content has been kept low, 0.96%, when compared with the 1.47% of SUJ2, thereby suppressing the growth of large carbides in the matrix in order to prevent a shortened life due to enlargement or coarseness of the carbides.

Fig. 1 is a plot on a Weibull chart of the results of a rolling fatigue life test under extreme conditions using a specified of cylindrical rollers 20 mm diameter and 20 mm long manufactured from the aforementioned two materials A and B in Table 1. Test conditions were 440 kgf/mm$^2$ of maximum contact stress (Pmax), and 3 x 10$^4$ cpm of stess repetitions per minute. The axis of the abscissa shows repeated stress cycles, and the axis of the ordinate shows cumulative failure probability. As is shown in Fig. 1, because the sample of invented steel A is comprised as shown in Table 1, the number of cycles required for the 10% life (B$_{10}$ life), specifically the number of cycles required to achieve a cumulative failure probability of 10%, for the invented steel A is 10.1 times that of the control steel, when compared with the control steel SUJ2 (the common steel in the figure), and the B$_{50}$ life, specifically the number of cycles required to achieve a cumulative failure probability of 50%, is 8.6 times that of the control, a significantly increased life.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. A high carbon chromium bearing steel characterized in that a carbon content is from 1.1% to 1.5% by weight, a silicon content is 1.0% to 2.0% by weight, a chromium content is 0.7% to 1.3% by weight, and a manganese content is 0.2% to 1.0% by weight, with remaining constituents including unavoidable impurities and iron.

2. A high carbon chromium bearing steel according to claim 1 characterized in that the carbon content is 1.31% by weight; the silicon content is 1.35% content by weight; the chromium content is 0.96% by weight and the manganese content 0.31% by weight.

3. A high carbon chromium bearing steel according to claim 2, characterized in that a phosphorus content is 0.009% by weight and a sulphur content is 0.005% by weight.

Fig . 1

CONDITIONS

LOAD : MAXIMUM CONTACT STRESS
Pmax = 440 kgf / mm²

SPEED : NO. OF STRESS REPETITIONS
30,000 cpm

WEIBULL CHART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 929 523 (KINOSHI et al.)<br>* Claims 1,2 *<br>--- | 1 | C 22 C 38/18 |
| Y | GB-A-1 408 218 (UGINE ACIERS)<br>* Claims 1,4 *<br>--- | 1 | |
| Y | GB-A- 802 457 (REGIE NATIONALE DES USINES RENAULT)<br>* Claim 1 *<br>--- | 1 | |
| A | US-A-2 753 260 (PAYSON)<br>* Claims 1,2 *<br>--- | 1 | |
| A | GB-A-2 155 951 (AICHI STEEL WORKS LTD)<br>* Claims 1-7 * & JP-A-60 194 047 (Cat. A,D)<br>----- | 1 | |
| | | | **TECHNICAL FIELDS SEARCHED (Int. Cl.4)**<br><br>C 22 C 38/18<br>C 22 C 38/34 |

The present search report has been drawn up for all claims

| Place of search | Date of completion of the search | Examiner |
|---|---|---|
| THE HAGUE | 06-07-1989 | LIPPENS M.H. |